# FASCICULE DE BREVET EUROPEEN

(11) **EP 1 570 890 B1**
(45) Date de publication et mention de la délivrance du brevet: **24.01.2007**
(21) Numéro de dépôt: 05003850.4
(22) Date de dépôt: 23.02.2005
(51) Int. Cl.: B01D 21/02

(54) **Dispositif de decantation pour reservoir de liquide de frein**
Absetzvorrichtung für Bremsflüssigkeitsbehälter
Clarifying device for brake liquid reservoir

(30) Priorité: 02.03.2004 FR 0402225
(43) Date de publication de la demande: 07.09.2005
(73) Titulaire: ROBERT BOSCH GMBH, 70442 Stuttgart (DE)
(72) Inventeur: Fraisse, Emmanuel, 75001 Paris (FR)
(74) Mandataire: Hurwic, Aleksander Wiktor

(56) Documents cités:
- DE-A- 3 141 728
- DE-A- 10 002 118
- DE-C- 10 216 362
- US-A- 4 935 128

## Description

La présente invention concerne un dispositif de décantation et/ou de filtrage de liquide de frein pour réservoir de liquide de frein d'un véhicule et s'applique avantageusement aux véhicules automobiles.

Les véhicules à déplacement sur roues tels que les véhicules automobiles possèdent un ou plusieurs systèmes de freinage permettant de ralentir la rotation des roues et de les immobiliser. Ils possèdent ainsi couramment un système de freinage à transmission hydraulique permettant d'agir sur des moyens de freinage (disques ou tambours) qui viennent par friction limiter, en cas de freinage, la rotation des essieux du véhicule.

La transmission de la commande de freinage se fait de manière connue par un circuit hydraulique qui est rempli d'un liquide de freinage. Une commande de freinage située généralement dans le poste de conduite permet d'agir sur un système de pistons pour transmettre, aux moyens de freinage, l'effort de freinage par l'intermédiaire du liquide de freinage.

Les moyens de freinage agissent par frottement des garnitures de freins sur des organes tournants solidaires des essieux du véhicule. Ce sont par exemple les garnitures des plaquettes de freins qui frottent sur un disque solidaire d'un essieu ou des garnitures de freins qui frottent sur la face intérieur d'un cylindre appelé tambour et solidaire d'un essieu du véhicule.

Certains systèmes de freinage offrent des options supplémentaires telles que l'anti-blocage des roues (ABS), le contrôle électronique de la trajectoire du véhicule (ESP), le contrôle de freinage électro-hydraulique (EHB).

Les systèmes d'anti-blocage des roues opèrent généralement par prélèvement de liquide de freinage dans le système de frein.

Les systèmes ESP aspirent le liquide de frein dans le réservoir de liquide de frein via le maître cylindre.

Les systèmes EHB aspirent le liquide directement dans le réservoir et l'envoient aux cylindres de roues.

Dans ces différents cas on doit prévoir un retour du liquide de frein vers le réservoir de liquide de frein. Cependant, le liquide en retour, du fait de son passage dans le circuit de freinage du véhicule peut être chargé d'impuretés. De plus, ce retour se fait souvent sous forme d'une injection rapide dans le réservoir et peut occasionner la formation de bulles d'air dues à l'agitation du liquide.

L'invention fournit un dispositif de décantation et de filtrage du liquide de frein pour réservoir de liquide de frein permettant de résoudre ces problèmes.

L'invention concerne donc un dispositif de décantation de liquide de frein pour réservoir de liquide de frein de véhicule comprenant un réservoir de liquide de frein permettant d'alimenter en liquide de frein le circuit de freinage d'un véhicule et comprenant un accès de retour du liquide de frein provenant de divers organes du circuit de freinage du véhicule. Il est prévu un compartiment d'accès du liquide de frein séparé d'une enceinte de réserve de liquide de frein et communiquant avec cette enceinte de réserve par une canalisation reliant par une première extrémité le fond d'une première zone du compartiment d'accès au fond de l'enceinte de réserve. Un tube d'accès du liquide en retour est aménagé dans une deuxième zone du compartiment d'accès. De plus, une paroi de décantation sépare la première zone de la deuxième zone.

Selon une forme de réalisation, un réservoir comporte ledit compartiment d'accès et ladite enceinte de réserve qui sont alors séparés tous deux par une paroi de séparation. La paroi de décantation est plus haute que le niveau d'accès du tube d'accès du liquide en retour et sa hauteur est supérieure au niveau minimum de liquide de frein.

La deuxième zone du compartiment d'accès peut entourer la première zone et la paroi de décantation peut entourer ladite première zone.

Selon une forme de réalisation intéressante, le compartiment d'accès est de forme cylindrique d'axe perpendiculaire au fond du réservoir et le tube d'accès est orienté dans le compartiment d'accès de telle façon que la direction du flux de liquide en retour tangente ladite paroi de séparation.

Par ailleurs on prévoit d'interposer un filtre entre la première extrémité de ladite canalisation et le tube d'accès.

Avantageusement, ce filtre sépare la première zone de la deuxième zone.

Ce filtre peut être un filtre de forme cylindrique ou tronconique dont l'axe est perpendiculaire au fond du compartiment d'accès et dont la paroi périphérique entoure la première extrémité de la canalisation.

Ce filtre peut être placé entre la première extrémité de la canalisation et ladite paroi de décantation.

Par ailleurs on prévoira avantageusement que l'orifice de remplissage du réservoir soit situé à l'aplomb de la première extrémité de la canalisation et que ledit filtre relie l'orifice de remplissage au fond du compartiment d'accès.

Pour permettre notamment que le filtre puisse être changé, on prévoira le diamètre extérieur du filtre légèrement inférieur au diamètre de l'orifice de remplissage. Et si le filtre est de forme tronconique avec le petit diamètre du tronc de cône inférieur au diamètre de l'orifice de remplissage du réservoir et le grand diamètre du tronc de cône égal ou légèrement inférieur au diamètre de l'orifice de remplissage, on placera le filtre de telle façon que le grand diamètre est situé au niveau de l'orifice de remplissage tandis que le petit diamètre du tronc de cône est placé en contact avec le fond du compartiment d'accès.

Préférentiellement on prévoira le filtre en matériau plastique présentant des mailles de filtrage de 5 micromètres de côté ou de diamètre. De plus, le filtre pourra posséder une armature rigide sur laquelle sera fixée une toile de filtrage.

L'invention concerne également un système de freinage pour véhicule automobile comportant un maître cylindre, un circuit de freinage reliant ledit maître cylindre à des dispositifs de freinage des roues du véhicule, un réservoir de liquide de frein, une pompe permettant d'extraire du liquide de frein à partir dudit circuit de freinage et de le réinjecter dans ledit réservoir, un calculateur commandant le fonctionnement de ladite pompe en fonction d'informations transmises par des capteurs disposés notamment au niveau des roues, ainsi qu'un dispositif tel que décrit précédemment.

Les différents aspects et caractéristiques de l'invention apparaîtront plus clairement dans la description qui va suivre et dans les figures annexées qui représentent :
- la figure 1, une vue en coupe du dispositif de décantation et/ou de filtrage selon l'invention ;
- la figure 2, une vue en coupe de dessus du dispositif de la figure 1.
- la figure 3, un exemple de système de freinage de véhicule mettant en oeuvre le dispositif de décantation et/ou de filtrage selon l'invention.

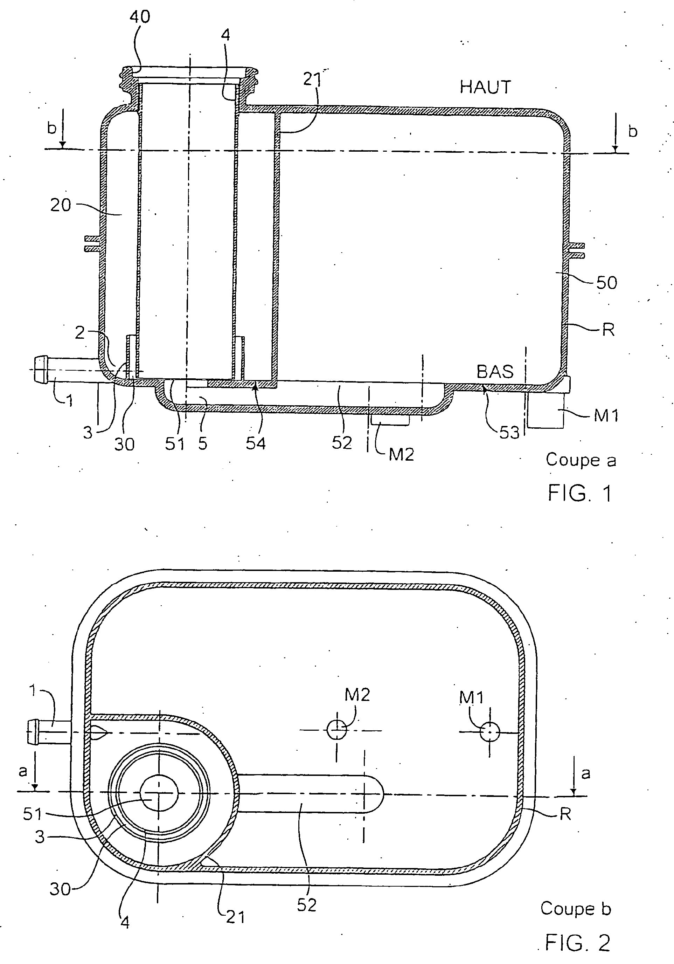

En se reportant aux figures 1 et 2, on va donc décrire un exemple de réalisation du dispositif de décantation et/ou de filtrage selon l'invention.

Sur la figure 1 on voit un réservoir de liquide de frein avec son orifice de remplissage 40 et ses sorties M1 et M2 vers le maître cylindre comme cela est connu dans la technique.

A l'intérieur du réservoir, on prévoit une paroi verticale 21 qui délimite un compartiment d'accès du liquide de frein en retour et l'enceinte de réserve du liquide de frein 50 du réservoir. Sur la figure 1, la paroi 21 joint le fond du réservoir à la partie haute du réservoir, mais cela n'est pas obligatoire.

Le tube d'accès 1 du liquide de frein en retour débouche dans le compartiment d'accès et est situé dans la partie basse de ce compartiment.

Sur la figure 2 qui représente une vue en coupe de dessus, on voit que le compartiment d'accès ne représente qu'une partie seulement du volume du réservoir.

Dans le fond du réservoir est prévue une canalisation 5 permettant de faire communiquer le compartiment d'accès 20 et l'enceinte de réserve 50 du réservoir. L'extrémité 51 de la canalisation 5 communique donc librement avec l'intérieur du compartiment d'accès, tandis que l'extrémité 52 communique avec l'enceinte de réserve.

Autour de l'extrémité 51 de la canalisation 5 est prévue une paroi 3 de hauteur limitée. Cette paroi ménage donc une zone 2 qui ne peut communiquer avec l'enceinte de réserve 50 et qui empêche le liquide de frein qui s'y trouve de partir. Cette zone 2 servira donc de zone de décantation pour le liquide de frein. La hauteur de la paroi 3 est prévue de telle façon que le haut de la paroi 3 soit au dessus du niveau supérieur du tube 1. Ainsi l'arrivée du liquide de frein par le tube 1 dans la zone 2 se fera en milieu liquide ce qui atténuera les effets de turbulences et l'intrusion d'air ou de gaz dans le liquide de frein.

La hauteur de la paroi 3 sera supérieure au niveau minimal acceptable du liquide de frein dans le réservoir de façon à assurer un volume de sécurité de liquide de freinage dans l'enceinte de réserve de liquide 50.

Par ailleurs, comme cela est visible sur la figure 2, on prévoit de donner à la paroi 21 une forme courbe voire cylindrique. On prévoit également d'orienter l'axe du tube 1 tangentiellement à la courbure de la paroi 21. De cette façon la direction du flux de liquide de frein arrivant dans le compartiment d'accès par le tube 1 sera sensiblement tangent à la paroi intérieure 21 et le flux tournera à l'intérieur du compartiment d'accès en évitant de faire des remous. Cela évitera un brassage du liquide et l'introduction de gaz ou d'air dans le liquide frein.

Par ailleurs, il est prévu un filtre permettant de filtrer le liquide de frein qui transite du compartiment d'accès vers l'enceinte de réserve 50 de liquide de frein. En effet le liquide de frein en retour qui provient des circuits hydrauliques de freinage du véhicule peut contenir des impuretés. Il convient donc de le filtrer.

Ce filtre prend la forme d'un filtre cylindrique sur l'exemple de réalisation des figures 1 et 2.

Selon les figures 1 et 2, l'orifice de remplissage du réservoir est à l'aplomb de l'extrémité 51 de la canalisation 5. Le filtre 4 joint l'orifice de remplissage 40 au fond 54 du compartiment d'accès 20. Ce filtre entoure l'extrémité d'accès 51 et la paroi 3 entoure le filtre 4.

De cette façon, le liquide de frein en retour par le tube 1 sera décanté dans la zone de décantation 2. Le liquide situé au dessus de la paroi 3 pourra passer à travers le filtre 4 et être transmis à la réserve de liquide 50.

Selon une forme de réalisation avantageuse de l'invention, on prévoit que le filtre est interchangeable. Son diamètre est légèrement inférieur au diamètre de l'orifice de remplissage 40. Sa hauteur fait toute la hauteur du compartiment d'accès.

Selon une autre forme de réalisation, le filtre a une forme légèrement tronconique. Le filtre est placé avec son petit diamètre situé en contact ou en quasi-contact avec le fond du compartiment d'accès et avec son grand diamètre localisé au niveau de l'orifice de remplissage.

Le filtre pourra être réalisé en fibres de plastique présentant un maillage de 5 micromètres, par exemple, de côté (ou de diamètre). On prévoira avantageusement une armature de forme cylindrique sur laquelle on fixera une toile de filtrage. Cette armature pourra également être en plastique.

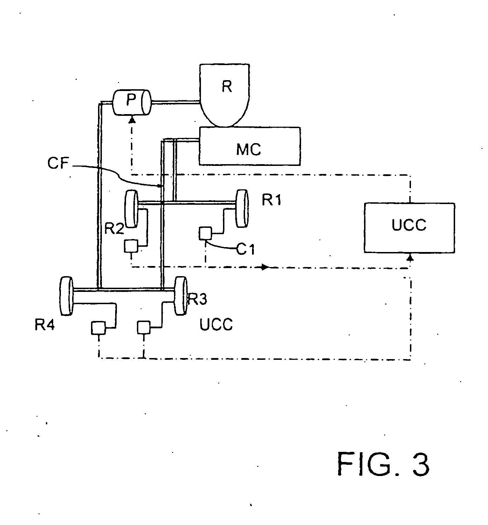

L'invention est applicable à un système de freinage de véhicule automobile tel que schématisé par la figure 3. Ce système comporte un circuit de freinage CF qui relie un maître cylindre de frein MC aux différents dispositifs de freinage (non représentés) des roues R1 à R4 du véhicule. Une pompe P permet de pomper du liquide de freinage dans le circuit de freinage CF (par exemple au niveau du dispositif de freinage de la roue R4 sur la figure 3) et de réinjecter ce liquide dans le réservoir R de liquide de frein conçu comme décrit précédemment. La pompe P fonctionne sous la commande d'une unité centrale de commande ou calculateur UCC en fonction d'informations fournies par des capteurs situés, par exemple, au niveau des dispositifs de freinage des roues.

## Revendications

1. Dispositif de décantation de liquide de frein pour réservoir de liquide de frein de véhicule comprenant un réservoir de liquide de frein (R) permettant d'alimenter en liquide de frein le circuit de freinage d'un véhicule et comprenant un accès (1) de retour du liquide de frein provenant de divers organes du circuit de freinage du véhicule, **caractérisé en ce qu'**il comporte un compartiment d'accès (20) du liquide de frein séparé d'une enceinte de réserve (50) de liquide de frein et communiquant avec cette enceinte de réserve (50) par une canalisation (5) reliant par une première extrémité (51) le fond d'une première zone du compartiment d'accès (20) au fond (52) de l'enceinte de réserve (50) ; un tube d'accès (1) du liquide en retour étant aménagé dans une deuxième zone du compartiment d'accès (20) ; une paroi de décantation (3) séparant la première zone de la deuxième zone.

2. Dispositif de décantation de liquide de frein pour réservoir de liquide de frein selon la revendication 1, **caractérisé en ce qu'**il comporte un réservoir comportant ledit compartiment d'accès (20) et ladite enceinte de réserve (50) séparés tous deux par une paroi de séparation (21), la paroi de décantation (3) étant plus haute que le niveau d'accès du tube d'accès du liquide en retour et sa hauteur étant supérieure au niveau minimum de liquide de frein.

3. Dispositif de décantation de liquide de frein pour réservoir de liquide de frein selon la revendication 2, **caractérisé en ce que** ladite deuxième zone entoure ladite première zone et **en ce que** la paroi de décantation entoure ladite première zone.

4. Dispositif de décantation de liquide de frein pour réservoir de liquide de frein selon la revendication 1, **caractérisé en ce que** le compartiment d'accès est de forme cylindrique d'axe perpendiculaire au fond du réservoir et que le tube d'accès (1) est orienté dans le compartiment d'accès de telle façon que la direction du flux de liquide en retour tangente ladite paroi de séparation (21).

5. Dispositif de décantation et/ou de filtrage de liquide de frein pour réservoir de liquide de frein selon l'une des revendications 1 à 4, **caractérisé en ce qu'**il comporte un filtre (4) interposé entre la première extrémité (51) de la canalisation (5) et le tube d'accès (1).

6. Dispositif de décantation et/ou de filtrage de liquide de frein pour réservoir de liquide de frein selon la revendication 5, **caractérisé en ce que** ledit filtre sépare la première zone de la deuxième zone.

7. Dispositif de décantation et/ou de filtrage de liquide de frein pour réservoir de liquide de frein selon la revendication 5, **caractérisé en ce que** le filtre est un filtre de forme cylindrique ou tronconique dont l'axe est perpendiculaire au fond du compartiment d'accès et dont la paroi périphérique entoure la première extrémité (51) de la canalisation (5).

8. Dispositif de décantation et/ou de filtrage de liquide de frein pour réservoir de liquide de frein selon la revendication 7, **caractérisé en ce que** ledit filtre (4) est placé entre la première extrémité (51) de la canalisation (5) et ladite paroi de décantation (3).

9. Dispositif de décantation et/ou de filtrage de liquide de frein pour réservoir de liquide de frein selon la revendication 7, **caractérisé en ce que** l'orifice de remplissage (40) du réservoir (R) est situé à l'aplomb de la première extrémité (51) de la canalisation (5) et **en ce que** ledit filtre relie l'orifice de remplissage (40) au fond (54) du compartiment d'accès (20).

10. Dispositif de décantation et/ou de filtrage de liquide de frein pour réservoir de liquide de frein selon la revendication 9, **caractérisé en ce que** le diamètre extérieur du filtre (4) est légèrement inférieur au diamètre de l'orifice de remplissage.

11. Dispositif de décantation et/ou de filtrage de liquide de frein pour réservoir de liquide de frein selon la revendication 10, **caractérisé en ce que** le filtre (4) est de forme tronconique, le petit diamètre du tronc de cône étant inférieur au diamètre de l'orifice de remplissage et étant placé en contact avec le fond du compartiment d'accès, le grand diamètre du tronc de cône étant égal ou légèrement inférieur au diamètre de l'orifice de remplissage et étant situé au niveau de l'orifice de remplissage.

12. Dispositif de décantation et/ou de filtrage de liquide de frein pour réservoir de liquide de frein selon l'une quelconque des revendications 5 à 10, **caractérisé en ce que** ledit filtre est en matériau plastique présentant des mailles de filtrage de 5 micromètres de coté ou de diamètre.

13. Dispositif de décantation et/ou de filtrage de liquide de frein pour réservoir de liquide de frein selon la revendication 10, **caractérisé en ce que** le filtre possède une armature rigide sur laquelle est fixé une toile de filtrage.

14. Système de freinage pour véhicule automobile comportant un maître cylindre (MC), un circuit de freinage (CF) reliant ledit maître cylindre à des dispositifs de freinage des roues du véhicule, un réservoir de liquide de frein (R), une pompe (P) permettant d'injecter du liquide de frein dans ledit circuit de freinage (CF) ou d'en extraire et de le réinjecter dans ledit réservoir (R), une unité de commande (UCC) commandant le fonctionnement de ladite pompe en fonction d'informations transmises par des capteurs (C1), disposés notamment au niveau des roues (R1 à R4), **caractérisé en ce qu'**il comporte un dispositif selon l'une quelconque des revendications précédentes.

## Claims

1. Brake fluid clarifying device for a brake fluid reservoir of a vehicle comprising a brake fluid reservoir (R) allowing the braking circuit of a vehicle to be supplied with brake fluid and comprising a return access (1) for the brake fluid coming from various components of the vehicle braking circuit, **characterized in that** it comprises an access compartment (20) for the brake fluid separated from a brake fluid reserve chamber (50) and communicating with this reserve chamber (50) via a duct (5) which, via a first end (51), connects the bottom of a first region of the access compartment (20) to the bottom (52) of the reserve chamber (50); an access tube (1) for the returning liquid being arranged in a second region of the access compartment (20); a clarifying wall (3) separating the first region from the second region.

2. Brake fluid clarifying device for a brake fluid reservoir according to Claim 1, **characterized in that** it comprises a reservoir comprising the said access compartment (20) and the said reserve chamber (50), both separated by a partition wall (21), the clarifying wall (3) being higher than the access level of the access tube for the returning fluid and its height being greater than the minimum brake fluid level.

3. Brake fluid clarifying device for a brake fluid reservoir according to Claim 2, **characterized in that** the said second region surrounds the said first region, and **in that** the clarifying wall surrounds the said first region.

4. Brake fluid clarifying device for a brake fluid reservoir according to Claim 1, **characterized in that** the access compartment is of cylindrical shape with an axis perpendicular to the bottom of the reservoir, and **in that** the access tube (1) is oriented in the access compartment in such a way that the direction of the flow of returning fluid is tangential to the said partition wall (21).

5. Brake fluid clarifying and/or filtering device for a brake fluid reservoir according to one of Claims 1 to 4, **characterized in that** it comprises a filter (4) interposed between the first end (51) of the duct (5) and the access tube (1).

6. Brake fluid clarifying and/or filtering device for a brake fluid reservoir according to Claim 5, **characterized in that** the said filter separates the first region from the second region.

7. Brake fluid clarifying and/or filtering device for a brake fluid reservoir according to Claim 5, **characterized in that** the filter is a filter of cylindrical or frustoconical shape whose axis is perpendicular to the bottom of the access compartment and whose peripheral wall surrounds the first end (51) of the duct (5).

8. Brake fluid clarifying and/or filtering device for a brake fluid reservoir according to Claim 7, **characterized in that** the said filter (4) is placed between the first end (51) of the duct (5) and the said clarifying wall (3).

9. Brake fluid clarifying and/or filtering device for a brake fluid reservoir according to Claim 7, **characterized in that** the filling orifice (40) of the reservoir (R) is situated in vertical alignment with the first end (51) of the duct (5), and **in that** the said filter connects the filling orifice (40) to the bottom (54) of the access compartment (20).

10. Brake fluid clarifying and/or filtering device for a brake fluid reservoir according to Claim 9, **characterized in that** the outside diameter of the filter (4) is slightly less than the diameter of the filling orifice.

11. Brake fluid clarifying and/or filtering device for a brake fluid reservoir according to Claim 10, **characterized in that** the filter (4) is of frustoconical shape, the small diameter of the cone frustum being less than the diameter of the filling orifice and being placed in contact with the bottom of the access compartment, the large diameter of the cone frustum being equal to or slightly less than the diameter of the filling orifice and being situated at the filling orifice.

12. Brake fluid clarifying and/or filtering device for a brake fluid reservoir according to any one of Claims 5 to 10, **characterized in that** the said filter is made of plastic having filtering meshes with a side length or diameter of 5 micrometers.

13. Brake fluid clarifying and/or filtering device for a brake fluid reservoir according to Claim 10, **characterized in that** the filter has a rigid framework on which a filtering cloth is fixed.

14. Motor vehicle braking system comprising a master cylinder (MC), a braking circuit (CF) connecting the the said master cylinder to devices for braking the wheels of the vehicle, a brake fluid reservoir (R), a pump (P) for injecting brake fluid into the said braking circuit (CF) or withdrawing it therefrom and reinjecting it into the said reservoir (R), a control unit (UCC) controlling the operation of the said pump dependent on information transmitted by sensors (C1), which are arranged in particular at the wheels (R1 to R4), **characterized in that** it comprises a device according to any one of the preceding claims.

## Patentansprüche

1. Vorrichtung zum Abklären von Bremsflüssigkeit für einen Bremsflüssigkeitsbehälter in einem Fahrzeug, mit einem Bremsflüssigkeitsbehälter (R), der die Versorgung des Bremskreises eines Fahrzeugs mit Bremsflüssigkeit ermöglicht und einen Einlass (1) für den Rücklauf der Bremsflüssigkeit aus verschiedenen Organen des Fahrzeugbremskreises aufweist, **dadurch gekennzeichnet, dass** sie eine Kammer (20) für den Einlass der Bremsflüssigkeit aufweist, die von einem Raum (50) zum Sammeln von Bremsflüssigkeit getrennt und über eine Leitung (5), die über ein erstes Ende (51) den Boden eines ersten Bereichs der Einlasskammer (20) mit dem Boden (52) des Sammelraums (50) verbindet, mit diesem Sammelraum (50) in Verbindung steht, wobei ein Rohr (1) für den Einlass der rücklaufenden Flüssigkeit in einem zweiten Bereich der Einlasskammer (20) ausgebildet ist und eine Absetzwand (3) den ersten Bereich von dem zweiten Bereich trennt.

2. Vorrichtung zum Abklären von Bremsflüssigkeit für einen Bremsflüssigkeitsbehälter nach Anspruch 1, **dadurch gekennzeichnet, dass** sie einen Behälter mit der Einlasskammer (20) und dem Sammelraum (50) aufweist, welche durch eine Trennwand (21) voneinander getrennt sind, wobei die Absetzwand (3) höher ist als der Einlassbereich des Rohrs für den Einlass der rücklaufenden Flüssigkeit und ihre Höhe über dem minimalen Bremsflüssigkeitsfüllstand liegt.

3. Vorrichtung zum Abklären von Bremsflüssigkeit für einen Bremsflüssigkeitsbehälter nach Anspruch 2, **dadurch gekennzeichnet, dass** der zweite Bereich den ersten Bereich umgibt und die Absetzwand den ersten Bereich umgibt.

4. Vorrichtung zum Abklären von Bremsflüssigkeit für einen Bremsflüssigkeitsbehälter nach Anspruch 1, **dadurch gekennzeichnet, dass** die Einlasskammer zylinderförmig ist und eine zum Boden des Behälters senkrechte Achse besitzt und dass das Einlassrohr (1) so zur Einlasskammer ausgerichtet ist, dass die Richtung des Stroms der rücklaufenden Flüssigkeit tangential zur Trennwand (21) verläuft.

5. Vorrichtung zum Abklären und/oder Filtern von Bremsflüssigkeit für einen Bremsflüssigkeitsbehälter nach einem der Ansprüche 1 bis 4, **dadurch gekennzeichnet, dass** sie einen Filter (4) aufweist, der zwischen dem ersten Ende (51) der Leitung (5) und dem Einlassrohr (1) angeordnet ist.

6. Vorrichtung zum Abklären und/oder Filtern von Bremsflüssigkeit für einen Bremsflüssigkeitsbehälter nach Anspruch 5, **dadurch gekennzeichnet, dass** der Filter den ersten Bereich von dem zweiten Bereich trennt.

7. Vorrichtung zum Abklären und/oder Filtern von Bremsflüssigkeit für einen Bremsflüssigkeitsbehälter nach Anspruch 5, **dadurch gekennzeichnet, dass** der Filter ein zylinderförmiger oder kegelstumpfartiger Filter ist, dessen Achse senkrecht zum Boden der Einlasskammer verläuft und bei dem die Umfangswand das erste Ende (51) der Leitung (5) umgibt.

8. Vorrichtung zum Abklären und/oder Filtern von Bremsflüssigkeit für einen Bremsflüssigkeitsbehälter nach Anspruch 7, **dadurch gekennzeichnet, dass** der Filter (4) zwischen dem ersten Ende (51) der Leitung (5) und der Absetzwand (3) angeordnet ist.

9. Vorrichtung zum Abklären und/oder Filtern von Bremsflüssigkeit für einen Bremsflüssigkeitsbehälter nach Anspruch 7, **dadurch gekennzeichnet, dass** die Füllöffnung (40) des Behälters (R) senkrecht zum ersten Ende (51) der Leitung (5) angeordnet ist und der Filter die Füllöffnung (40) mit dem Boden (54) der Einlasskammer (20) verbindet.

10. Vorrichtung zum Abklären und/oder Filtern von Bremsflüssigkeit für einen Bremsflüssigkeitsbehälter nach Anspruch 9, **dadurch gekennzeichnet, dass** der Außendurchmesser des Filters (4) geringfügig kleiner ist als der Durchmesser der Füllöffnung.

11. Vorrichtung zum Abklären und/oder Filtern von Bremsflüssigkeit für einen Bremsflüssigkeitsbehälter nach Anspruch 10, **dadurch gekennzeichnet, dass** der Filter (4) kegelstumpfartig ist, wobei der kleiner Durchmesser des Kegelstumpfes kleiner ist als der Durchmesser der Füllöffnung und so angeordnet ist, dass er den Boden der Einlasskammer berührt, und wobei der große Durchmesser des Kegelstumpfes dem Durchmesser der Füllöffnung entspricht oder geringfügig kleiner ist als dieser und sich auf Höhe der Füllöffnung befindet.

12. Vorrichtung zum Abklären und/oder Filtern von Bremsflüssigkeit für einen Bremsflüssigkeitsbehälter nach einem der Ansprüche 5 bis 10, **dadurch gekennzeichnet, dass** der Filter aus Kunststoffmaterial mit Filtriermaschen besteht, die seitlich oder im Durchmesser 5 Mikrometer betragen.

13. Vorrichtung zum Abklären und/oder Filtern von Bremsflüssigkeit für einen Bremsflüssigkeitsbehälter nach Anspruch 10, **dadurch gekennzeichnet, dass** der Filter eine starre Umhüllung aufweist, an der ein Filtriertuch befestigt ist.

14. Bremssystem für ein Kraftfahrzeug, mit einem Hauptzylinder (MC), wobei ein Bremskreis (CF) den Hauptzylinder mit Vorrichtungen zum Bremsen der Fahrzeugräder verbindet, einem Bremsflüssigkeitsbehälter (R), einer Pumpe (P), die das Einspritzen von Bremsflüssigkeit in den Bremskreis (CF) oder das Ableiten von Bremsflüssigkeit aus diesem und das erneute Einspritzen in den Behälter (R) ermöglicht, einer Steuereinheit (UCC), die den Betrieb der Pumpe in Abhängigkeit von Information steuert, welche von Sensoren (C1) gesendet werden, die insbesondere auf Höhe der Räder (R1 bis R4) angeordnet sind, **dadurch gekennzeichnet, dass** es eine Vorrichtung nach einem der vorhergehenden Ansprüche aufweist.
